Europäisches Patentamt

European Patent Office

Office européen des brevets

(11) Veröffentlichungsnummer: **0 241 828**
**A2**

(12) **EUROPÄISCHE PATENTANMELDUNG**

(21) Anmeldenummer: 87105012.6

(22) Anmeldetag: 04.04.87

(51) Int. Cl.⁴: **C12G 1/02**

(30) Priorität: 16.04.86 CH 1529/86

(43) Veröffentlichungstag der Anmeldung:
21.10.87 Patentblatt 87/43

(84) Benannte Vertragsstaaten:
AT CH DE FR IT LI

(71) Anmelder: **BUCHER-GUYER AG Maschinenfabrik**

**CH-8166 Niederweningen/Zürich(CH)**

(72) Erfinder: **Schlinkert, Johannes Seilerweg 5E D-7891 Rheinheim(DE)**

(54) Behälter für die Aufbereitung, Entsaftung und/oder Lagerung von Maische.

(57) Für die Aufbereitung, Entsaftung und/oder Lagerung von Traubenmaische verwendeter Behälter (l), mit einer Maischeeinfüll-(4) und Entleerungsöffnung (l7) und einer im Maischeraum vorgesehenen, horizontalachsig rotierend angetriebenen Rührvorrichtung (7), diese Rührvorrichtung (7) besitzt wenigstens zwei im Abstand zur Rührerwelle (20) wendelartig in einem Winkelbereich ($\alpha$) von ca. l20° gegensinnig um diese angeordnete bandförmige Rührblätter (2l), deren Enden jeweils einander gegenüberliegend von der Rührerwelle (20) angeordnet sind.

Fig. 3

EP 0 241 828 A2

## Behälter für die Aufbereitung, Entsaftung und/oder Lagerung von Maische

Die Erfindung betrifft einen Behälter für die Aufbereitung, Entsaftung und/oder Lagerung von Maische, vornehmlich aus Trauben, der eine Maischeeinfüll-und Entleerungsöffnung aufweist und mit einer um eine horizontale Achse rotierend antreibbaren im Maischeraum angeordneten Rührvorrichtung versehen ist.

Insbesondere bei der Rotweinbereitung werden die Trauben zur Verbesserung der Farbausbeutung der Häute und des Aufschlusses der Struktur einem Gärungsprozess ausgesetzt. Die Mazerierungszeit ist bei der Behandlung von weissen Trauben vorwiegend kürzer und wird zur Gewinnung von Bouquet-und Geschmacksstoffen angeordnet. Es werden auch Enzymatisierungsvorgänge im Behälter durchgeführt und durch den Einsatz einer Heizung wird die Farbausbeutung begünstigt.

Bei einem bekannten Behälter der eingangs beschriebenen Art wird nach dem sog. ROTO-Verfahren eine rasche Maischeentsaftung, eine Maischevergärung in kürzerer Zeit, eine Verminderung der Oxydation, eine optimale Farbausbeutung bei minimalen Betriebskosten erreicht. Als Einrichtung dient ein um eine horizontale Achse rotierend antreibbarer, zylindrischer Behälter, der einenends mit einer Einfüll-und Entleerungsöffnung für die Maische versehen ist und der ein an der Innenwand des Behälters von der Einfüll-und Entleerungsöffnung zur entfernteren Behälterstirnwand verlaufende Austragsschnecke aufweist. Diese Austragsschnecke bewirkt bei Rotation des Behälters ein laufendes Umschichten der Maische und fördert dadurch ihre Entsaftung, wobei de ren Flüssigkeit in die vom Maischeraum abgetrennten Senträume und den diese verbindenden Kanal eintritt. Der sich bei der Vergärung der Maische bildende Tresterhut wird bei rotierendem Behälter durch die Austragsschnecke am Rand in Teile zerstört und in die Flüssigkeit eingetaucht. Dieser Vorgang ist aufgrund seiner Ineffizienz unwirtschaftlich und verursacht hohe Scherkräfte zwischen der Austragsschnecke und der Maische, die zur Trübung der Flüssigkeit führen. Auch der Gärungsprozess leidet infolge des unbefriedigenden Mischeffektes der vornehmlich am Behälterrand wirkenden Austragsschnecke.

Die Rotwein-Technologie kennt u.a. stehende zylindrische Behälter zur Aufbereitung und Entsaftung von Maische, die konzentrisch zur Behälterachse eine Rührvorrichtung aufweisen, deren obere Rührorgane die feste Maischedecke in Teile zerstören und diese nach unten verdrängen, um anschliessend wieder aufzusteigen. Dieses Konzept verhindert eine optimale Ausgestaltung der Rührvorrichtung wegen den an der Behälterwand sich von oben nach unten erstreckenden Saftauffangräumen bzw. eine über die gesamte Behälterhöhe wirkende Rührvorrichtung beeinträchtigt das Ausmass der Entsaftungsfläche. Das Unterbringen solcher Behälter in Altbauten erweist sich wegen fehlender Raumhöhe oft als schwierig und das Behälterinnere ist zu Reinigungszwecken sehr umständlich.

Weiterhin bekannt sind Maischegärtanks zur Rotweinbereitung der Bezeichnung Vino Top-Fermenter bekannt. Diese als liegende, annähernd zylindrisch ausgebildeten Behälter sind mit einer um die konzentrische Behälterachse rotierende Rühreinrichtung versehen, deren Rührarme bis annähernd an die Behälterwand reichende, als an der Rührerwelle sich versetzt gegenüberliegende Schaufeln ausgebildet sind. Der untere Behälterteil ist mit keilförmig an den zylindrischen Mantel verlaufenden Flächenelementen ausgebildet, in deren Innerem eine die Maische gegen eine untenliegende Entleerungsöffnung fördernde Austragsschnecke vorgesehen ist. Seitlich versetzt zur Austragsschnecke ist das eine keilige Flächenelement mit einer Drainagevorrichtung versehen, die mit einem absperrbaren Saftauffangraum kommuniziert. Die mit paddelartigen Schaufeln versehene Rührvorrichtung erzeugt hohe Scherkräfte an der Maische bei mässigem Zerkleinerungs-und Durchmischungseffekt der sich an der Oberfläche der Flüssigkeit bildenden zähen Decke aus Feststoffen, sowie eine unerwünschte Schaumbildung.

Aufgabe der Erfindung ist es, einen Behälter der eingangs beschriebenen Art mit einer Rühreinrichtung zu schaffen, bei der die Maische schonend durchmischt und ein verbesserter wirtschaftlicher Einsatz erzielt werden kann.

Erfindungsgemäss wird diese Aufgabe dadurch gelöst, dass die um eine zumindest annähernd horizontale Achse rotierend antreibbare Rührvorrichtung aus wenigstens einem sich in einem Winkelbereich ($\alpha$) wendelartig entlang der Rührerwelle erstreckenden Rührblatt gebildet ist.

Dadurch wird es möglich sein, die sich an der Oberfläche der Flüssigkeit bildende Schicht der Feststoffe von unten her aufzureissen und sie in die Flüssigkeit einzutauchen, wobei die Ausführungsform der Rührvorrichtung eine schonende Behandlung der Maische gewährleistet.

Es erweist sich als vorteilhaft, wenn das Rührblatt bandförmig ausgebildet und mit seitlichem Abstand an der Rührerwelle befestigt ist, was sich insbesondere bei grösseren Behältern günstig auf deren Wirtschaftlichkeit auswirkt.

Bei einer bevorzugten Ausführungsform weist der durch den wendelartigen Verlauf eines Rührblattes gebildete Winkelbereich weniger als 180° auf. Diese Massnahme gestattet die Verwendung mehrerer Rührblätter an der Rührerwelle. Bei zwei Rührblättern beträgt dieser Winkelbereich im Idealfall ca. 120°.

Die Anordnung von zwei Rührblättern, die gegensinnig ausgerichtet an der Rührerwelle befestigt sind, derart, dass die jeweils vor den stirnseitigen Innenwänden bzw. den Trennwänden des Behälters endenden Rührblätter an der Rührerwelle sich gegenüberliegend angeordnet sind und einen um die Achse der Rührvorrichtung gebildeten Winkel von weniger als 180° einschliessen, wirkt sich insofern günstig auf die Behandlung der Maische aus, als dass letztere schonend und intensiv durchmischt wird. Durch die Wahl der Grösse des Winkelbereichs kann die gewünschte Behandlung der Maische eingestellt und die aufzuwendende Energie optimalisiert werden. Ein Winkel $\beta$ von ca. 60° erweist sich als besonders günstig.

Zur Befestigung der Rührblätter an der Rührerwelle sind vorzugsweise Stützorgane als Verbindungsmittel vorgesehen, die eine bezüglich Fertigungskosten günstige Lösung darstellen. Selbstverständlich könnten bei mehreren Rührblättern auch segmentartige Verbindungsteile die Rührblätter aufnehmen. Die Anzahl der Stützorgane für jedes Rührblatt richtet sich nach der Grösse des Behälters bzw. der vorkommenden Flüssigkeitsmenge.

Sofern der Behälter auch zum Abtropfen der Flüssigkeit von der Maische verwendet werden soll, kann vorteilhaft der Innenraum des Behälters durch wenigstens eine Drainageeinrichtung in einen Flüssigkeitsauffangraum unterteilt werden.

Zu diesem Zweck kann vorteilhaft eine perforierte Trennwand an wenigstens ein stirnseitiges Ende der Rührvorrichtung anschliessend, etwa senkrecht zu deren Achse, im Behälter angeordnet sein.

Dabei erweist es sich als günstig, wenn die der Trennwand zugekehrten Enden der Rührblätter mit einer Räumvorrichtung (abstreiferähnlich) zur Reinigung der Perforation in der Trennwand versehen sind.

Zur Erzielung eines möglichst hohen Wirkungsgrades, kann die Oberseite des Behälters eine zumindest annähernd der Umlaufbahn der Rührvorrichtung entsprechende Form aufweisen.

Der Flüssigkeitsauffangraum könnte auch mit einer im Abstand zur Behälterwand nach innen versetzte und annähernd die halbe untere Behältermantelfläche überdeckende perforierte Trennwand versehen sein.

Zur Reinigung dieser Drainageeinrichtung könnten die Rührblätter eine gegen die perforierte Trennwand gerichtete Räumvorrichtung, beispielsweise elastische oder starre Abstreifer, aufweisen.

Anschliessend wird die Erfindung anhand eines in der Zeichnung dargestellten Ausführungsbeispiels erläutert. Es zeigen:

Fig. 1 eine Seitenansicht des erfindungsgemässen Behälters,

Fig. 2 eine Ansicht der Stirnseite des Behälters in Fig. 1 und

Fig. 3 eine räumliche Darstellung des Behälters.

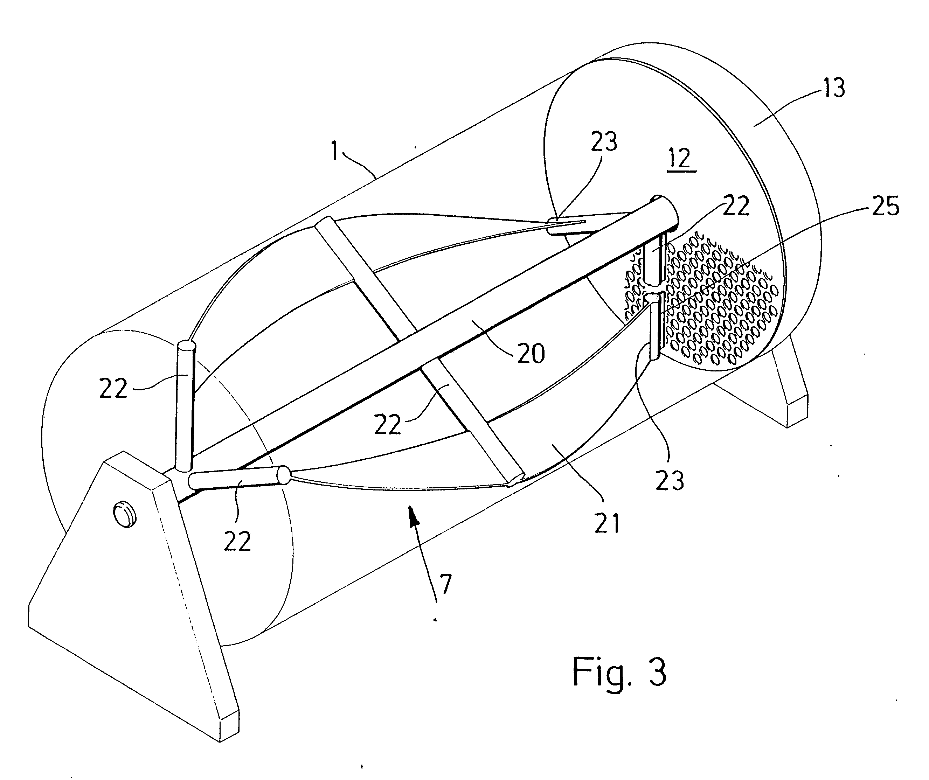

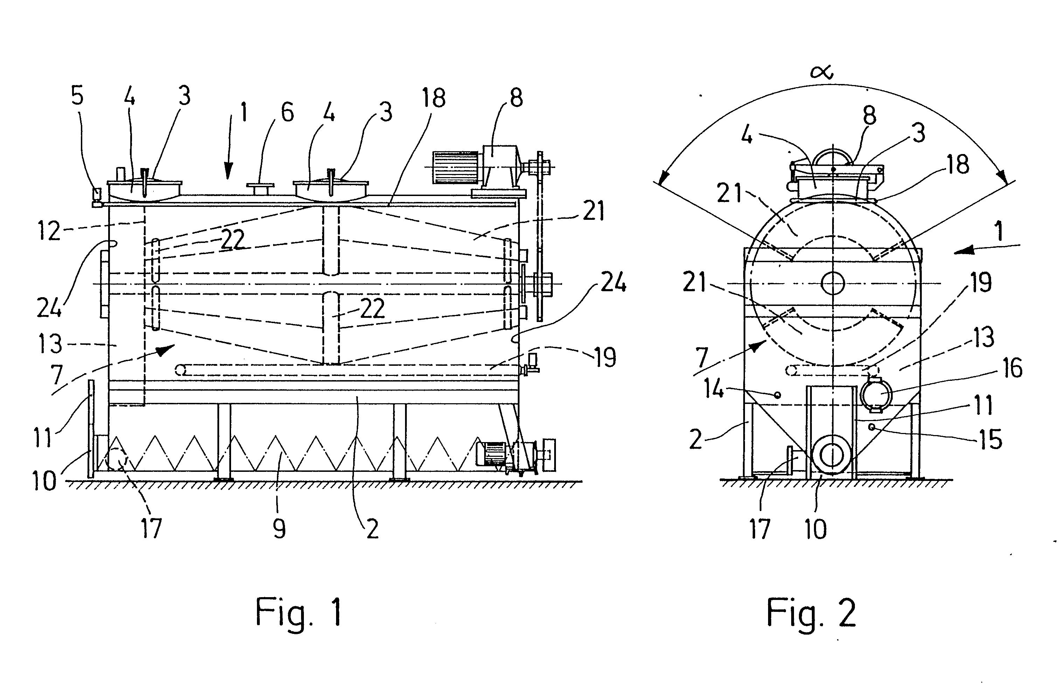

Fig. 1 zeigt einen auf einem Gestell 2 aufliegenden Behälter 1 für die Aufbereitung, Entsaftung und/oder Lagerung von Maische, vornehmlich aus Trauben oder dgl. landwirtschaftlichen Produkten. Dieser Behälter 1 ist im oberen Bereich gewölbeartig ausgebildet und weist anschliessend einen prismatischen Mittelteil auf, der nach unten hin sich keilförmig verengt. Der gewölbeartige, an die Umlaufbahn der Rührvorrichtung angepasste Behälterbereich weist zwei mittels Deckel 3 absperrbare Mannlöcher 4 auf, von denen das eine mit einer Entlüftungsvorrichtung 5 versehen ist. Pos. 6 deutet auf eine Einfüllöffnung für die Maische hin.

Das Behälterinnere durchsetzt eine um eine horizontale Achse antreibbare Rührvorrichtung 7, die an den Stirnseiten des Behälters 1 gelagert und mit einem auf dem Behälter befestigten Motor 8 antriebsverbunden ist. Im unteren Behälterbereich ist eine parallel zur Längsachse der Rührvorrichtung 7 verlaufende, motorisch angetriebene Förderschnecke 9 vorgesehen, an deren förderwirksamen Ende eine Austragsöffnung 10 für die Maische angeordnet ist. Die Austragsöffnung 10 wird durch einen in einer Führung 11 vertikal beweglichen Verschlussschieber freigelegt bzw. abgesperrt.

Im Abstand zur einen Stirnseite ist innerhalb des Behälters 1 durch eine senkrecht zur Achse der Rührvorrichtung 7 verlaufende perforierte Trennwand 12 ein Flüssigkeitsauffangraum 13 gebildet. Aus diesem kann der Saft über den Stutzen 14 abgezogen werden; eine Abzugsmöglichkeit des Saftes aus dem Behälter 1 ausserhalb des Flüssigkeitsauffangraumes 13 besteht bei Stutzen 15. Zur Reinigung des Flüssigkeitsauffangraumes 13 ist die in Fig. 2 angedeutete Reinigungsöffnung 16 vorgesehen. Vornehmlich zur Entnahme der Maische aus dem Behälter 1 dient der Entnahmestutzen 17 am Ende der Förderschnecke 9.

Ergänzend sei noch auf die Verwendung einer auf die Behälteraussenwand einwirkende Kühlwassersprühanlage 18 und die Heizung 19 im Behälter zur Erwärmung der Maische hingewiesen. Zur eingehenden Erläuterung der Rührvorrichtung 7 verweisen wir auf die Fig. 1 und 3.

Die um eine horizontale Achse antreibbare Rührvorrichtung 7 besitzt zwei sich in einen Winkelbereich entlang der Rührerwelle 20 wendelartig windenden Rührblätter 21. Die Anzahl der Rührblätter 21 richtet sich nach Wirtschaftlichkeit und gewünschter Intensität der Rührvorrichtung. Der Winkelbereich α eines sich entlang der Rührerwelle 20 erstreckenden Rührblattes weist bei der veranschaulichten Rührvorrichtung 7 ca. 120° auf und beide Rührblätter 21 sind regelmässig verteilt an der Rührerwelle 7 befestigt. Die Rührerblätter 21 sind bandförmig ausgebildet und mit seitlichem (radialem) Abstand zur Rührerwelle 20 angeordnet. Zu diesem Zweck sind von der Rührerwelle 20 radial abstehende Stützorgane 22 vorgesehen, an denen seitlich die Rührblätter 21 befestigt sind. Bei der Anbringung von zwei Rührblättern 21 ist auf die gegensinnige Ausrichtung zu achten, in der Weise, dass die jeweils vor den stirnseitigen Innenwänden 24 des Behälters 1 und/oder Trennwänden 12 endenden Rührblätter 21 an der Rührerwelle 20 sich gegenüberliegend angeordnet sind und einen um die Achse der Rührvorrichtung gebildeten Winkel β von weniger als 180° einschliessen. Besonders günstig erweist sich ein Winkel β von ca. 60°.

In ihrer Quererstreckung sind die verdrehten Rührblätter 21 wenigstens annähernd radial zur Achse der Rührvorrichtung 7 ausgerichtet und geben so eine optimale Rührwirkung ab.

Zur Befestigung der Rührblätter 21 sind jeweils drei radial abstehende Stützorgane 22 vorgesehen, die die Rührerwelle 20 mit den Rührblättern 21 verbinden.

Wie in der Zeichnung dargestellt, kann der Behälter 1 bei Verwendung einer Trennwand 12 oder anderer Drainageeinrichtungen in einen Flüssigkeitsauffangraum 13 unterteilt werden, so dass sich der Saft teilweise vor dem Pressen der Maische entziehen lässt. Die Trennwand 12, die auch auf beiden Seiten der Rührvorrichtung 7 angeordnet sein könnte, ist etwa senkrecht zur Rührvorrichtung 7 angeordnet und wird hier von der Rührerwelle 20 durchsetzt, wozu vorteilhaft eine einfache Dichtung zwischen Rührerwelle 20 und Trennwand 12 einzusetzen ist.

Während dem Entsaftungsvorgang setzen sich die Festteile der Maische an den Trennwänden 12 fest, sodass ihre Drainagewirkung gemindert wird. Zur Behebung dieses Uebelstandes ist die Stirnseite der Rührvorrichtung 7 mit einer Räumvorrichtung 25 versehen, die beispielsweise als flexibler, auf die Trennwand 12 einwirkender oder als starrer, von der Trennwand 12 durch einen Spalt distanzierter Abstreifer ausgebildet ist.

Der untere Behälterbereich könnte auch an die Form der Umlaufbahn der Rührvorrichtung 7 angelehnt werden und eine Drainageeinrichtung aufweisen, die als Trennwand im Abstand zur Behälterinnenwand versetzt angeordnet und annähernd die halbe Behälterinnenfläche überdeckend perforiert ausgebildet ist.

Bezüglich Räumvorrichtung wären sodann die Rührblätter (21) an der äusseren Längskante mit Abstreifern zu versehen.

**Ansprüche**

1. Behälter für die Aufbereitung, Entsaftung und/oder Lagerung von Maische, vornehmlich aus Trauben, der eine Maischeeinfüll-und Entleerungsöffnung aufweist und mit einer im Maischeraum angeordneten Rührvorrichtung versehen ist, dadurch gekennzeichnet, dass die um eine zumindest annähernd horizontale Achse rotierend antreibbare Rührvorrichtung (7) aus wenigstens einem sich in einem Winkelbereich (α) wendelartig entlang der Rührerwelle (20) erstreckenden Rührblatt (21) gebildet ist.

2. Behälter nach Anspruch 1, dadurch gekennzeichnet, dass das Rührblatt (21) bandförmig ausgebildet und mit seitlichem Abstand an der Rührerwelle (20) befestigt ist.

3. Behälter nach Anspruch 1, dadurch gekennzeichnet, dass der durch den wendelartigen Verlauf eines Rührblattes (21) gebildete Winkelbereich (α) weniger als 180° aufweist.

4. Behälter nach Anspruch 1, dadurch gekennzeichnet, dass an der Rührerwelle (20) zwei gegensinnig ausgerichtete Rührblätter (21) befestigt sind, derart, dass die jeweils vor den stirnseitigen Innen-(24) bzw. Trennwänden (12) des Behälters (1) endenden Rührblätter (21) an der Rührerwelle (20) sich gegenüberliegend angeordnet sind und einen um die Achse der Rührvorrichtung (7) gebildeten Winkel (β) von weniger als 180° einschliessen.

5. Behälter nach Anspruch 2, dadurch gekennzeichnet, dass die Rührblätter (21) in der Quererstreckung wenigstens annähernd radial zur Achse der Rührvorrichtung (7) ausgerichtet sind.

6. Behälter nach Anspruch 1 oder 2, dadurch gekennzeichnet, dass die Rührblätter (21) an Stützorganen (22) mit der Rührerwelle (20) verbunden sind.

7. Behälter nach einem der Ansprüche 1 bis 6, dadurch gekennzeichnet, dass er als Gär-und/oder Abtropfbehälter ausgebildet ist und durch wenigstens eine Drainageeinrichtung (12) in einen Flüssigkeitsauffangraum (13) unterteilt ist.

8. Behälter nach Anspruch 7, dadurch gekennzeichnet, dass eine perforierte Trennwand (12) an wenigstens ein stirnseitiges Ende der Rührvorrichtung (7) anschliessend, etwa senkrecht zu deren Achse, im Behälter (I) angeordnet ist.

9. Behälter nach Anspruch 8, dadurch gekennzeichnet, dass das der Trennwand (12) zugekehrte stirnseitige Ende der Rührvorrichtung (7) mit einer Räumvorrichttung (25) versehen ist.

10. Behälter nach einem der Ansprüche I bis 8, dadurch gekennzeichnet, dass seine Oberseite eine zumindest annähernd der Umlaufbahn der Rührvorrichtung (7) entsprechende Form aufweist.

II. Behälter nach Anspruch 10, dadurch gekennzeichnet, dass eine im Abstand zur Behälterwand nach innen versetzte und annähernd die halbe untere Behältermantelfläche überdeckende perforierte Trennwand vorgesehen ist.

12. Behälter nach Anspruch II, dadurch gekennzeichnet, dass die Rührblätter (21) mit einer gegen die perforierte Trennwand (12) gerichtete Räumvorrichtung (25) versehen sind.

Fig. 3

0 241 828

Fig. 1

Fig. 2

0 241 828